(19) Europäisches Patentamt
European Patent Office
Office européen des brevets

(11) **EP 4 353 788 A1**

(12) **EUROPEAN PATENT APPLICATION**
published in accordance with Art. 153(4) EPC

(43) Date of publication:
**17.04.2024 Bulletin 2024/16**

(21) Application number: **22864274.0**

(22) Date of filing: **18.08.2022**

(51) International Patent Classification (IPC):
**C09D 11/30** (2014.01)    **C09D 11/38** (2014.01)
**C08G 18/00** (2006.01)    **C08G 18/32** (2006.01)
**C08G 18/75** (2006.01)    **B41M 5/00** (2006.01)

(52) Cooperative Patent Classification (CPC):
**B41M 5/00; C08G 18/00; C08G 18/32; C08G 18/75;
C09D 11/30; C09D 11/38**

(86) International application number:
**PCT/JP2022/031159**

(87) International publication number:
**WO 2023/032689 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021  JP 2021140993**

(71) Applicant: **DIC Corporation**
**Tokyo 174-8520 (JP)**

(72) Inventors:
• **SHINKAI Tomoaki**
**Kitaadachi-gun, Saitama 362-8577 (JP)**
• **NAITO Wakana**
**Takaishi-shi, Osaka 592-0001 (JP)**

(74) Representative: **TBK**
**Bavariaring 4-6**
**80336 München (DE)**

(54) **BINDER RESIN COMPOSITION FOR AQUEOUS INK-JET INK, AQUEOUS INK-JET INK, AND PRINTED LAYER**

(57)    An object of the present invention is to provide a binder resin composition having excellent storage stability and jettability of the composition and being capable of providing excellent abrasion resistance and color development properties of printed materials. A binder resin composition for aqueous ink-jet ink applications of the present invention includes a urethane resin (I), a basic compound (II), and an aqueous medium (III). The urethane resin (I) is a reaction product of a polyol (a), a polyisocyanate (b), and an amine compound (c). The amine compound (c) is a plurality of amine compounds having different structures, and one of the amine compounds is a linear diamine compound (c1-1) or a hydrazine compound (c1-2) .

**EP 4 353 788 A1**

**Description**

Technical Field

The present invention relates to a binder resin composition for aqueous ink-jet ink applications, to an aqueous ink-jet ink, and to a printing layer.

Background Art

Ink-jet (IJ) recording devices perform printing with a printing method that includes firing small droplets of an ink composition and depositing the droplets onto a recording medium, such as paper. As the demand for on-demand printing increases, the use of aqueous IJ printers has been rapidly expanding in recent years, for example, in industrial wide format applications.
Among ink-jet inks for use in ink-jet recording devices that have been proposed, an example contains a polycarbonate-based urethane resin that has an elongation at break of greater than or equal to 300% (see Patent Literature 1).

Citation List

Patent Literature

PTL 1: Japanese Unexamined Patent Application Publication No. 2017-150125

Summary of Invention

Technical Problem

Ink-jet inks are generally classified into two categories: dye-based inks and pigment-based inks. Currently, the use of pigment-based inks is becoming more popular because of their water resistance and weatherability. Unfortunately, pigment-based inks have a poor ability to penetrate into a recording medium (substrate) and, therefore, a portion of the pigment is left on the recording medium. This results in a problem associated with abrasion (scratch) resistance of printed materials. This problem can be solved by adding an aqueous urethane resin that serves as a binder to the ink, thereby imparting adhesion between the pigment particles. However, the addition of a binder may reduce the storage stability and jettability of the ink.
The present invention has been made in view of the above-described circumstances, and, accordingly, an object of the present invention is to provide a binder resin composition that can be used in the production of an aqueous ink-jet ink and a printed material, the aqueous ink-jet ink having excellent storage stability and jettability and being capable of providing excellent abrasion resistance and color development properties of printed materials.

Solution to Problem

The present inventors diligently conducted studies and, consequently, discovered that using a specific binder resin can solve the above-described problem. Accordingly, the present invention was completed.
Specifically, the present invention includes the following embodiments.

[1] A binder resin composition for aqueous ink-jet ink applications including a urethane resin (I); a basic compound (II); and an aqueous medium (III), wherein the urethane resin (I) is a reaction product of a polyol (a), a polyisocyanate (b), and an amine compound (c), and the amine compound (c) is a plurality of amine compounds having different structures, and one of the amine compounds is a linear diamine compound (c1-1) or a hydrazine compound (c1-2) .
[2] The binder resin composition for aqueous ink-jet ink applications according to [1], wherein the amine compound (c) further includes a primary or secondary monoamine compound (c2-1), an alicyclic diamine compound (c2-2), an aromatic diamine compound (c2-3), a triamine compound (c2-4), or a tetraamine compound (c2-5).
[3] The binder resin composition for aqueous ink-jet ink applications according to [1] or [2], wherein the basic compound (II) includes a metal hydroxide.
[4] The binder resin composition for aqueous ink-jet ink applications according to any one of [1] to [3], wherein the polyisocyanate (b) comprises an alicyclic polyisocyanate (b1) . [5] The binder resin composition for aqueous ink-jet ink applications according to any one of [1] to [4], wherein the polyol (a) includes at least one polymer diol (a1) selected from the group consisting of polyether polyols, polyester polyols, and polycarbonate polyols.
[6] An aqueous ink-jet ink including the binder resin composition for aqueous ink-jet ink applications according to any one of [1] to [5].
[7] A printing layer formed from the aqueous ink-jet ink according to [6].

Advantageous Effects of Invention

The binder resin composition for aqueous ink-jet ink applications of the present invention enables the production of an aqueous ink-jet ink having excellent storage stability and jettability and of printed materials having excellent abrasion resistance and color development properties. Description of Embodiments

A binder resin composition for aqueous ink-jet ink applications (hereinafter also referred to simply as a "resin composition") of the present invention includes a urethane resin (I), a basic compound (II), and an aqueous medium (III).

The urethane resin (I) is a reaction product of at least a polyol (a), a polyisocyanate (b), and an amine compound (c).

The polyol (a) includes at least one polymer diol (a1) selected from the group consisting of polyether polyols, polyester polyols, and polycarbonate polyols and includes an acid group-containing diol (a2). The inclusion of the polymer diol (a1) facilitates improvement in the durability of printed materials. The inclusion of the acid group-containing diol (a2) facilitates improvement in the stability of the resin composition. The polymer diol (a1) may be at least one polymer diol selected from the group consisting of polyether polyols and polycarbonate polyols. This is more preferable from the standpoint of improving the storage stability of an aqueous ink-jet ink and the abrasion resistance of printed materials.

Examples of the polyether polyols include polyether polyols obtained by addition-polymerizing an alkylene oxide with an initiator. The initiator is used as necessary and may be one or more compounds having two or more active hydrogen atoms.

Examples of the initiator include ethylene glycol, diethylene glycol, triethylene glycol, trimethylene glycol, 1,2-propanediol, 1,3-propanediol, 1,3-butanediol, 1,4-butanediol, 1,6-hexanediol, neopentyl glycol, glycerin, trimethylolethane, trimethylolpropane, sorbitol, sucrose, aconitic acid, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetrithiol.

Examples of the alkylene oxide include ethylene oxide, propylene oxide, butylene oxide, styrene oxide, epichlorohydrin, and tetrahydrofuran.

Examples of the polyester polyols include polyester polyols that can be obtained by reacting a low-molecular-weight polyol with a polycarboxylic acid; polyester polyols that can be obtained by performing a ring-opening polymerization reaction on a cyclic ester compound, such as ε-caprolactone; and polyester polyols that can be obtained by copolymerizing any of these.

The low-molecular-weight polyol for use in the production of the polyester polyol may be one or more low-molecular-weight polyols, examples of which include aliphatic polyols having a molecular weight of 50 or greater and 300 or less, such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, neopentyl glycol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, glycerin, trimethylolpropane, ditrimethylolpropane, trimethylolpropane, and pentaerythritol; polyols having an alicyclic structure, such as cyclohexanedimethanol and hydrogenated bisphenol A; and polyols having an aromatic structure, such as bisphenol A and bisphenol F.

The polycarboxylic acid may be one or more polycarboxylic acids, examples of which include aliphatic polycarboxylic acids, such as succinic acid, adipic acid, sebacic acid, and dodecanedicarboxylic acid; alicyclic polycarboxylic acids, such as 1,4-cyclohexanedicarboxylic acid and cyclohexanetricarboxylic acid; aromatic polycarboxylic acids, such as terephthalic acid, isophthalic acid, phthalic acid, and naphthalene dicarboxylic acid; and anhydrides or esterification products of any of the foregoing acids.

The polycarbonate polyol may specifically be an esterification reaction product of a carbonic acid ester and a polyhydric alcohol, a reaction product of a polyhydric alcohol and phosgene, or the like.

The carbonic acid ester may be one or more carbonic acid ester, examples of which include aliphatic carbonates, alicyclic carbonates (hereinafter, "incluing an alicyclic structure" may be referred to as "alicyclic"), and aromatic carbonates (hereinafter, "including an aromatic structure" may be generically referred to as "aromatic"). Examples of the aliphatic carbonates include saturated aliphatic carbonates, such as dimethyl carbonate, diethyl carbonate, ethyl methyl carbonate, di-n-butyl carbonate, diisobutyl carbonate, ethyl-n-butyl carbonate, and ethyl isobutyl carbonate; and unsaturated aliphatic carbonates, such as ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, and 2,4-pentylene carbonate. Examples of the aromatic carbonates include diphenyl carbonate and dibenzyl carbonate.

The polyhydric alcohol may be one or more polyhydric alcohols, examples of which include linear or branched diols, such as ethylene glycol, propylene glycol, butanediol, pentanediol, 3-methyl-1,5-pentanediol, hexanediol, diethylene glycol, dipropylene glycol, triethylene glycol, tripropylene glycol, polyethylene glycol, and polypropylene glycol; alicyclic diols, such as 1,4-cyclohexanedimethanol and hydrogenated bisphenol A; tri- or higher functional polyols, such as trimethylolmethane, trimethylolpropane, ditrimethylolpropane, pentaerythritol, and dipentaerythritol.

In the polyol (a), a content of the polymer diol (a1) is preferably greater than or equal to 25 mass%, more preferably greater than or equal to 35 mass%, and even more preferably greater than or equal to 40 mass% and is preferably less than or equal to 80 mass%, more preferably less than or equal to 70 mass%, and even more preferably less than or equal to 60 mass%. Increasing the content of the crystalline polycarbonate diol facilitates improvement in the durability of the resulting film.

The acid group-containing diol (a2) may be a carboxyl group- or sulfonic acid group-containing diol. Including a carboxyl group-containing diol is preferable. Examples of the carboxyl group-containing diol include 2,2-dimethylolpropionic acid, 2,2-dimethylolbutanoic acid, 2,2-dimethylolbutyric acid, and 2,2-dimethylolvaleric acid. Among these, 2,2-dimethylolpropionic acid is preferable. It is also possible to use a carboxyl group-containing polyester polyol that can be obtained by reacting a carboxyl group-containing polyol with any of a variety of polycarboxylic acids. Examples of the polycarboxylic acids include aliphatic polycarboxylic acids, such as succinic acid, adipic acid, sebacic acid, and dodecanedicarboxylic acid; alicyclic polycarboxylic acids, such as 1,4-cyclohexanedicarboxylic acid and cyclohexanetricarboxylic acid; aromatic polycarboxylic acids, such as terephthalic acid, isophthalic acid, phthalic acid, and naphthalene dicarboxylic acid; and acid anhydrides of any of the foregoing acids.

In the acid group-containing diol (a2), the content of the carboxyl group-containing diol is preferably greater than or equal to 80 mass%, more preferably greater than or equal to 90 mass%, and even more preferably greater than or equal to 95 mass%, with the upper limit being 100 mass%.

Examples of the sulfonic acid group-containing polyol include polyester polyols that can be obtained by reacting a dicarboxylic acid or a salt thereof with a low-molecular-weight polyol. Examples of the dicarboxylic acid include 5-sulfoisophthalic acid, sulfoterephthalic acid, 4-sulfophthalic acid, and 5[4-sulfophenoxy] isophthalic acid. Examples of the low-molecular-weight polyol include the polyols mentioned above as examples of polyols that can be used in the production of a polyester polyol having an aromatic structure.

In the polyol (a), the total content of the polymer diol (a1) and the acid group-containing diol (a2) is preferably greater than or equal to 30 mass%, more preferably greater than or equal to 40 mass%, and even more preferably greater than or equal to 50 mass%, with the upper limit being 100 mass%.

The polyol (a) may include an additional polyol (a3) along with the polymer diol (a1) and the acid group-containing diol (a2). Examples of the additional polyol (a3) include low-molecular-weight polyols.

The low-molecular-weight polyol is a polyol having a molecular weight of less than 500 (preferably less than or equal to 450 and more preferably less than or equal to 400, with the lower limit being approximately 50), examples of which include aliphatic polyols, such as ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, 1,6-hexanediol, and cyclohexanedimethanol; alicyclic polyols, such as cyclobutanediol, cyclopentanediol, 1,4-cyclohexanediol, cycloheptanediol, cyclooctanediol, butylcyclohexanediol, cyclohexanedimethanol, hydroxypropylcyclohexanol, dicyclohexanediol, hydrogenated bisphenol A, 1,3-adamantanediol, 1,1'-bicyclohexylidenediol, and cyclohexanetriol; and aromatic polyols, such as bisphenol A, bisphenol F, bisphenol AD, and ethylene oxide or propylene oxide adducts of any of the foregoing polyols.

In the polyol (a), the content of the additional polyol (a3) is preferably less than or equal to 40 mass%, more preferably less than or equal to 30 mass%, and even more preferably less than or equal to 20 mass%, with the lower limit being 0 mass%.

The polyisocyanate (b) includes an alicyclic polyisocyanate (b1). The alicyclic polyisocyanate (b1) is a compound having an alicyclic structure in the molecule and containing at least two isocyanate groups. The alicyclic polyisocyanate (b1) may be one or more alicyclic polyisocyanates, examples of which include isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane diisocyanate, 2,2'-dimethyldicyclohexylmethane diisocyanate, bis(4-isocyanato-n-butylidene) pentaerythritol, dimer acid diisocyanate, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-3-(3-isocyanatopropyl)-6-(2-isocyanatoethyl)-bicyclo[2.1.1]-heptane, 2-isocyanatomethyl-2-(3-isocyanatopropyl)-5-(2-isocyanatoethyl)-bicyclo[2.2.1]-heptane, 2-isocyanatomethyl-2-(3-isocyanatopropyl)-6-(2-isocyanatoethyl)-bicyclo[2.2.1]-heptane, and norbornene diisocyanate. The alicyclic polyisocyanate (b1) is preferably a saturated alicyclic polyisocyanate, which is preferably a monocyclic (non-fused) alicyclic polyisocyanate. One alicyclic polyisocyanate may be used alone, or two or more alicyclic polyisocyanates may be used in combination.

In the polyisocyanate (b), the content of the alicyclic polyisocyanate (b1) is preferably greater than or equal to 30 mass%, more preferably greater than or equal to 40 mass%, and even more preferably greater than or equal to 50 mass% and is preferably less than or equal to 95 mass%, more preferably less than or equal to 90 mass%, and even more preferably less than or equal to 85 mass%.

The polyisocyanate (b) may include an additional polyisocyanate (b2) along with the alicyclic polyisocyanate (b1). Examples of the additional polyisocyanate (b2) include aliphatic polyisocyanates and aromatic polyisocyanates.

Examples of the aliphatic polyisocyanates include hexamethylene diisocyanate, lysine diisocyanate methyl ester, xylylene diisocyanate, and tetramethylxylylene diisocyanate. One aliphatic polyisocyanate may be used alone, or two or more aliphatic polyisocyanates may be used in combination.

Examples of the aromatic polyisocyanates include phenylene diisocyanate, tolylene diisocyanate, diphenylmethane diisocyanate, and naphthalene diisocyanate. One aromatic polyisocyanate may be used alone, or two or more aromatic polyisocyanates may be used in combination.

A molar ratio (NCO/OH) of the isocyanate groups present in the polyisocyanate (b) to the hydroxy groups present in the polyol (a) is preferably greater than or equal to 1.05 and is preferably less than or equal to 3 and more preferably less than or equal to 2.

The amine compound (c) is a plurality of amine compounds having different structures, and one of the amine compounds is a linear diamine compound (c1-1) or a hydrazine compound (c1-2). The combined use of a plurality of amine compounds having different structures results in excellent jettability of an ink and excellent color development properties of printed materials.

The inclusion of the linear diamine compound (c1-1) or the hydrazine compound (c1-2) in the amine compound (c) facilitates improvement in the durability of printed materials.

The linear diamine compound (c1-1) is a compound containing two amino groups per molecule and having no side chain. Examples of the linear diamine compound (c1-1) include ethylenediamine, 1,3-propanediamine, 1,3-butanediamine, 1,4-butanediamine, 1,5-pentamethylenediamine, and 1,6-hexamethylenediamine.

The number of carbon atoms of the linear diamine compound (c1-1) is preferably less than or equal to 6, more preferably less than or equal to 5, and even more preferably less than or equal to 4 and is preferably greater than or equal to 2.

In the amine compound (c), the content of the linear diamine compound (c1-1) is preferably greater than or equal to 50 mass%, more preferably greater than or equal to 70 mass%, and even more preferably greater than or equal to 80 mass%, with the upper limit being 95 mass%.

Examples of the hydrazine compound (c1-2) include hydrazine, monomethylhydrazine, 1,2-dimethylhydrazine, 2-hydroxyethylhydrazine, phenylhydrazine, and 1,2-diphenylhydrazine.

In the amine compound (c), the content of the hydrazine compound (c1-2) is preferably greater than or equal to 50 mass%, more preferably greater than or equal to 70 mass%, and even more preferably greater than or equal to 80 mass%, with the upper limit being 95 mass%.

Preferably, the amine compound (c) includes an additional amine compound (c2) that is different from the linear diamine compound (c1-1) or the hydrazine compound (c1-2). Examples of the additional amine compound (c2) include primary or secondary monoamine compounds (c2-1), alicyclic diamine compounds (c2-2), aromatic diamine compounds (c2-3), triamine compounds with three amino groups (c2-4), and tetraamine compounds with four amino groups (c2-5). In particular, a primary or secondary monoamine compound (c2-1), an alicyclic diamine compound (c2-2), and/or a triamine compound (c2-4) may be used as the amine compound, in combination with the linear diamine compound (c1-1) or the hydrazine compound (c1-2). This is preferable because, in this case, excellent abrasion resistance and color development properties of printed materials can be achieved.

Examples of the primary or secondary monoamine compounds (c2-1) include n-butylamine, isobutylamine, monoethanolamine, monoisopropanolamine, N-methylethanolamine, N-ethylethanolamine, N-(hydroxymethyl)ethanolamine, diethanolamine, N-propylethanolamine, N-ethyl-2-methoxyethylamine, bis(2-methoxyethyl)amine, diisopropanolamine, 3-(methylamino)-1-propanol, 3-(isopropylamino)propanol, diethylamine, dibutylamine, pyrrolidine, piperidine, and morpholine.

Examples of the alicyclic diamine compounds (c2-2) include 1,4-cyclohexanediamine, 3-aminomethyl-3,5,5-trimethylcyclohexylamine (isophoronediamine), 4,4'-dicyclohexylmethanediamine, 2,5-bis(aminomethyl)bicyclo[2.2.1]heptane, 2,6-bis(aminomethyl)bicyclo[2.2.1]heptane, and 1,3-bis(aminomethyl)cyclohexane.

Examples of the aromatic diamine compounds (c2-3) include o-tolylenediamine, m-tolylenediamine, and p-tolylenediamine.

Examples of the triamine compounds (c2-4) include diethylenetriamine.

Examples of the tetraamine compounds (c2-5) include triethylenetetramine and tetraethylenepentamine.

In the amine compound (c), the content of the additional amine compound (c2) is preferably greater than or equal to 1.0 mass%, more preferably greater than or equal to 5.0 mass%, and even more preferably greater than or equal to 10.0 mass%, with the upper limit being 50.0 mass%. The content of the additional amine compound (c2) is more specifically the total content of the compounds denoted by compounds (c2-1) to (c2-5), even more specifically the total content of the compound (c2-1), the compound (c2-2), and/or the compound (c2-4), or particularly specifically the content of the compound (c2-1), the compound (c2-2), or the compound (c2-4).

A total amount of use of the amine compound (c) is preferably greater than or equal to 0.5 parts by mass, more preferably greater than or equal to 1.0 parts by mass, and even more preferably greater than or equal to 2.0 parts by mass and is preferably less than or equal to 15.0 parts by mass, more preferably less than or equal to 12.5 parts by mass, and even more preferably less than or equal to 10.0 parts by mass, per 100 parts by mass of the total of the polyol (a) and the polyisocyanate (b).

The polyol (a), the polyisocyanate (b), and the amine compound (c) may be reacted in any order. The polyol (a), the polyisocyanate (b), and the amine compound (c) may be reacted all at once or may be sequentially reacted; for example, it is preferable that a reaction product of the polyol (a) and the polyisocyanate (b) be reacted with the amine compound (c).

The urethane resin (I) has an acid number of greater than or equal to 15 mgKOH/g and less than or equal to 60 mgKOH/g. The acid number is preferably greater than or equal to 20 mgKOH/g, more preferably greater than or equal to 25 mgKOH/g, and even more preferably greater than or equal to 30 mgKOH/g and is preferably less than or equal to 55 mgKOH/g, more preferably less than or equal to 50 mgKOH/g, and even more preferably less than or equal to 40 mgKOH/g.

The urethane resin (I) has a weight average molecular weight that is preferably greater than or equal to 10000, more preferably greater than or equal to 20000, and even more preferably greater than or equal to 50000 and is preferably less than or equal to 2000000, more preferably less than or equal to 1000000, and even more preferably less than or equal to 500000.

In the invention of the present application, the weight average molecular weight and a number average molecular weight can be measured by performing gel permeation chromatography and obtaining values calculated from the values of polystyrene used as a standard.

In the resin composition, the content of the urethane resin (I) is preferably greater than or equal to 5 mass%, more preferably greater than or equal to 10 mass%, and even more preferably greater than or equal to 20 mass% and is preferably less than or equal to 50 mass%, more preferably less than or equal to 40 mass%, and even more preferably less than or equal to 35 mass%.

The basic compound (II) that is included can neutralize the acid groups present in the urethane resin (I), thereby improving the stability of the resin composition. Examples of the basic compound include ammonia; organic amines having a boiling point of lower than or equal to 200°C, such as, triethylamine, morpholine, monoethanolamine, and diethylethanolamine; and metal hydroxides, such as sodium hydroxide, potassium hydroxide, and lithium hydroxide.

In particular, it is preferable that the basic compound (II) include a metal hydroxide. The metal hydroxide is preferably an alkali metal hydroxide or an alkaline earth metal hydroxide and more preferably an alkali metal hydroxide.

In the basic compound (II), the content of the metal hydroxide (preferably an alkali metal hydroxide and/or an alkaline earth metal hydroxide, more preferably an alkali metal hydroxide) is preferably greater than or equal to 50 mass%, more preferably greater than or equal to 60 mass%, and even more preferably greater than or equal to 80 mass%, with the upper limit being 100 mass%.

The basic compound (II) may have a molar ratio (basic group/acid group) that is a ratio of the product of the number of moles of the basic groups present in the basic compound and their valence to the product of the number of moles of the acid groups present in the urethane resin and their valence. The molar ratio is preferably greater than or equal to 0.5 and more preferably greater than or equal to 0.8 and is preferably less than or equal to 3 and more preferably less than or equal to 2, so as to improve water dispersion stability of the resin composition.

Examples of the aqueous medium (III) include water, water-miscible organic solvents, and mixtures thereof. Examples of the water-miscible organic solvents include alcohol solvents, such as methanol, ethanol, n-propanol, isopropyl alcohol, 1,2-propylene glycol, and 1,3-butylene glycol; ketone solvents, such as acetone and methyl ethyl ketone; glycol ether solvents, such as ethylene glycol n-butyl ether, diethylene glycol n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol n-butyl ether, and tripropylene glycol methyl ether; and lactam solvents, such as N-methyl-2-pyrrolidone and N-ethyl-2-pyrrolidone; and amide solvents, such as N,N-dimethylformamide. One water-miscible organic solvent may be used alone, or two or more water-miscible organic solvents may be used in combination.

It is preferable that the aqueous medium (III) be only water or be a mixture of water and a water-miscible organic solvent, from the standpoint of ensuring safety and reducing environmental impact. More preferably, the aqueous medium (III) is only water.

The content of the aqueous medium (III) is preferably greater than or equal to 30 mass% and more preferably greater than or equal to 50 mass% and is preferably less than or equal to 80 mass% and more preferably less than or equal to 70 mass%, based on a total amount of the resin composition.

The resin composition may include one or more additional additives (IV) along with the urethane resin (I), the basic compound (II), and the aqueous medium (III). Examples of the additional additives (IV) include crosslinking agents, plasticizing agents, antistatic agents, waxes, surfactants, light stabilizers, rheology modifiers, dyes, leveling agents, rheology control agents, UV absorbers, antioxidants, photocatalytic compounds, preservatives, viscosity modifiers, pH-adjusting agents, and chelating agents.

The content of the additional additives is, for example, less than or equal to 30 mass% or, for example, less than or equal to 20 mass%, with the lower limit being 0 mass%, and the content may be greater than or equal to 0.1 mass%, based on a non-volatile content of the resin composition.

An aqueous ink-jet ink including the resin composition also falls within the technical scope of the present invention, and so does a printing layer formed from the aqueous ink-jet ink.

The aqueous ink-jet ink includes the urethane resin (I), the basic compound (II), the aqueous medium (III), and a coloring agent and may further include one or more additives or the like, such as an organic solvent, a surface modifying agent, a pigment dispersing resin, a drying inhibitor, a penetrating agent, and a surfactant.

Examples of the coloring agents include dyes and pigments. Including a pigment is preferable.

The pigments that may be used are, for example, compounds classified as pigments in the Colour Index published by the Society of Dyers and Colourists. Examples of the pigments include inorganic pigments and organic pigment.

Examples of the inorganic pigments include iron oxides; carbon blacks (carbon blacks produced by a contact method, a furnace method, a thermal method, or the like); and titanium oxides.

Examples of the carbon blacks include #2300, #2200B, #990, #900, #960, #980, #33, #40, #45, #45L, #52, HCF88, MA7, MA8, and MA100 (all manufactured by Mitsubishi Chemical Corporation); the Raven series (e.g., 5750, 5250, 5000, 3500, 1255, and 700) (all manufactured by Columbian Chemicals Company); the Regal series (e.g., 400R, 330R, and 660R), the Mogul series (e.g., L and 700), the Monarch series (e.g., 800, 880, 900, 1000, 100, 1300, and 1400) (all manufactured by Cabot Corporation); and the Color Black series (FW1, FW2, FW2V, FW18, FW200, S150, S160, and S170), the Printex series (e.g., 35, U, V, and 1400U), the Special Black series (e.g., 6, 5, 4, and 4A), and the NIPEX series (e.g., 150, 160, 170, 180, 95, 90, 85, 80, and 75) (all manufactured by Orion Engineered Carbons).

The organic pigment may be one or more organic pigments, example of which include the following pigments classified by chemical structures: azo pigments, such as azo lake pigments, insoluble azo pigments, condensed azo pigments, and chelate azo pigments; polycyclic pigments, such as phthalocyanine pigments, perylene pigments, perinone pigments, anthraquinone pigments, quinacridone pigments, dioxazine pigments, thioindigo pigments, isoindoline pigments, and quinophthalone pigments; dye chelates, such as basic dye type chelates and acidic dye type chelates; nitro pigments; nitroso pigments; and aniline blacks.

Specific examples of the organic pigments include yellow pigments, such as C.I. Pigment Yellows 1, 2, 12, 13, 14, 16, 17, 73, 74, 75, 83, 93, 95, 97, 98, 109, 110, 114, 120, 128, 129, 138, 150, 151, 154, 155, 174, 180, and 185; magenta pigments, such as C.I. Pigment Reds 5, 7, 12, 48 (Ca), 48 (Mn), 57 (Ca), 57:1, 112, 122, 123, 146, 150, 168, 176, 184, 185, 202, 209, 213, 269, and 282; cyan pigments, such as C.I. Pigment Blues 1, 2, 3, 15, 15:1, 15:2, 15:3, 15:4, 15:6, 16, 22, 60, 63, and 66; orange pigments, such as C.I. Pigment Oranges 5, 13, 16, 17, 34, 36, 43, 51, 64, and 71; violet pigments, such as C.I. Pigment Violets 1, 3, 5:1, 16, 19, 23, and 38; green pigments, such as C.I. Pigment Greens 1, 4, 7, 8, 10, 17, 18, and 36; and red pigments, such as C.I. Pigment Reds 1, 2, 3, 5, 17, 22, 23, 31, 38, 48:2, 48:3, 48:4, 49:1, 52:2, 53:1, 57:1, 60:1, 63:1, 63:2, 64:1, 81, 83, 88, 101, 104, 105, 106, 108, 112, 114, 122, 123, 146, 149, 150, 166, 168, 170, 172, 177, 178, 179, 184, 185, 190, 193, 202, 207, 208, 209, 213, 219, 224, 254, and 264.

The pigment may have a primary particle size so as to ensure dispersibility. The primary particle size is preferably less than or equal to 25 $\mu$m, more preferably less than or equal to 10 $\mu$m, and even more preferably less than or equal to 1 um. The primary particle size may be, for example, greater than or equal to 10 nm or greater than or equal to 30 nm, so as to ensure safety. The primary particle size can be measured with a transmission electron microscope (TEM).

The pigment may have a volume average particle size so as to ensure dispersibility. The volume average particle size is preferably less than or equal to 1 $\mu$m, more preferably less than or equal to 250 nm, and even more preferably less than or equal to 200 nm. The primary particle size may be, for example, greater than or equal to 10 nm or greater than or equal to 50 nm, so as to ensure safety. The volume average particle size of the pigment can be measured by laser diffractometry.

In the coloring agent, the content of the pigment is preferably greater than or equal to 80 mass%, more preferably greater than or equal to 90 mass%, and even more preferably greater than or equal to 95 mass%, with the upper limit being 100 mass%.

The content of the coloring agent is preferably greater than or equal to 1 mass%, more preferably greater than or equal to 5 mass%, and even more preferably greater than or equal to 10 mass% and is preferably less than or equal to 90 mass%, more preferably less than or equal to 80 mass%, and even more preferably less than or equal to 70 mass%, based on an amount on a solids basis of the aqueous ink-jet ink.

The pigment dispersing agent is a compound having a hydrophilic moiety and a hydrophobic moiety and serves to improve the dispersibility of the pigment in the aqueous medium (III). Examples of the pigment dispersing agent include styrene-acrylic acid copolymers, such as styrene-(meth)acrylic acid copolymers, styrene-(meth)acrylic acid ester-(meth)acrylic acid copolymers, and (meth)acrylic acid ester-(meth)acrylic acid copolymers. In the instance where a styrene-acrylic acid copolymer is used, the aqueous pigment dispersion may contain a basic compound, such as potassium oxide, present therein.

The content of the pigment dispersing agent is preferably greater than or equal to 5 parts by mass, more preferably greater than or equal to 10 parts by mass, and even more preferably greater than or equal to 20 parts by mass and is preferably less than or equal to 100 parts by mass, more preferably less than or equal to 70 parts by mass, and even more preferably less than or equal to 50 parts by mass, per 100 parts by mass of the coloring agent.

Preferably, the organic solvent is a hydrophilic organic solvent (an organic solvent that is miscible with water at 25°C), and specific examples thereof include ketone solvents, such as acetone, methyl ethyl ketone, methyl butyl ketone, and methyl isobutyl ketone; alcohol solvents, such as methanol, ethanol, 1-propanol, 2-propanol, 2-methyl-1-propanol, 1-butanol, 2-butanol, pentyl alcohol, and 2-methoxyethanol; ether solvents, such as tetrahydrofuran, 1,4-dioxane, and 1,2-dimethoxyethane; amide solvents, such as dimethylformamide and N-methylpyrrolidone; glycol solvents, such as ethylene glycol, diethylene glycol, triethylene glycol, tetraethylene glycol, propylene glycol, dipropylene glycol, polyethylene glycol, and polypropylene glycol; diol solvents, such as butanediol, pentanediol, hexanediol, and homologous diols thereof; glycol ester solvents, such as propylene glycol laurate; glycol ether solvents, such as diethylene glycol monoethyl ether, diethylene glycol monobutyl ether, diethylene glycol monohexyl ether, propylene glycol monoethyl ether, propylene glycol monomethyl ether, dipropylene glycol monoethyl ether, and triethylene glycol monoethyl ether; sulfolanes; lactone solvents, such as γ-butyrolactone; lactam solvents, such as N-methylpyrrolidone, N-(2-hydroxyethyl) pyrrolidone, and 2-pyrrolidone; nitrile solvents, such as acetonitrile; glycerin; glycerin derivatives, such as glycerin containing a polyoxyalkylene added thereto; and mixed solvents of one or more of the foregoing solvents.

In instances where a cyan pigment is used as the pigment, the organic solvent is preferably, for example, a glycol solvent; a lactam solvent; an ether solvent; a diol solvent; a mixed solvent of a lactam solvent and an alcohol solvent; or a mixed solvent of a lactam solvent and a glycol solvent. More preferably, the organic solvent is, for example, triethylene glycol; N-(2-hydroxyethyl) pyrrolidone; dipropylene glycol; N-methylpyrrolidone; 2-pyrrolidone; tetrahydrofuran; 1,2-hexanediol; a mixed solvent of N-methylpyrrolidone and methanol; or a mixed solvent of 2-pyrrolidone and dipropylene glycol. In the mixed solvents, a volume ratio (lactam solvent/alcohol solvent, or lactam solvent/glycol solvent) is preferably 1/9 to 9/1, more preferably 3/7 to 7/3, and even more preferably 4/6 to 6/4.

In instances where a magenta pigment is used as the pigment, the organic solvent is preferably, for example, a glycol solvent; a lactam solvent; a mixed solvent of an ether solvent and an alcohol solvent; or a mixed solvent of a lactam solvent and an alcohol solvent. More preferably, the organic solvent is, for example, dipropylene glycol; triethylene glycol; N-(2-hydroxyethyl) pyrrolidone; N-methylpyrrolidone; a mixed solvent of tetrahydrofuran and methanol; or a mixed solvent of 2-pyrrolidone and dipropylene glycol. In the mixed solvents, a volume ratio (ether solvent/alcohol solvent, or lactam solvent/alcohol solvent) is preferably 1/9 to 9/1, more preferably 3/7 to 7/3, and even more preferably 4/6 to 6/4.

In instances where a yellow pigment is used as the pigment, the organic solvent is preferably, for example, a ketone solvent; a nitrile solvent; a glycol solvent; a lactam solvent; or a mixed solvent of a lactam solvent and a glycol solvent. More preferably, the organic solvent is, for example, methyl ethyl ketone; acetonitrile; propylene glycol; triethylene glycol; N-(2-hydroxyethyl) pyrrolidone; N-methylpyrrolidone; or a mixed solvent of 2-pyrrolidone and dipropylene glycol. In the mixed solvents, a volume ratio (lactam solvent/glycol solvent) is preferably 1/9 to 9/1, more preferably 3/7 to 7/3, and even more preferably 4/6 to 6/4.

In instances where a black pigment is used as the pigment, the organic solvent is preferably a glycol solvent; a lactam solvent; a ketone solvent; or an amide solvent. More preferably, the organic solvent is triethylene glycol; N-(2-hydroxyethyl) pyrrolidone; 2-pyrrolidone, N-methylpyrrolidone, or methyl ethyl ketone.

In instances where an orange pigment is used as the pigment, the organic solvent is preferably, for example, a glycol solvent, an ether solvent; a lactam solvent; or a mixed solvent of a lactam solvent and a glycol solvent. More preferably, the organic solvent is, for example, triethylene glycol; N-(2-hydroxyethyl) pyrrolidone; tetrahydrofuran; 2-pyrrolidone; a mixed solvent of 2-pyrrolidone and dipropylene glycol; or a mixed solvent of N-methylpyrrolidone and dipropylene glycol. Even more preferably, the organic solvent is triethylene glycol; or N-(2-hydroxyethyl) pyrrolidone. In the mixed solvents, a volume ratio (lactam solvent/glycol solvent) is preferably 1/9 to 9/1, more preferably 3/7 to 7/3, and even more preferably 4/6 to 6/4.

In instances where a violet pigment is used as the pigment, the organic solvent is preferably, for example, a glycol solvent, a lactam solvent; an alcohol solvent; or a mixed solvent of a lactam solvent and a glycol solvent. More preferably, the organic solvent is triethylene glycol; N-(2-hydroxyethyl) pyrrolidone; N-methylpyrrolidone; 2-pyrrolidone; 2-propanol; or a mixed solvent of 2-pyrrolidone and dipropylene glycol. In the mixed solvents, a volume ratio (lactam solvent/glycol solvent) is preferably 1/9 to 9/1, more preferably 3/7 to 7/3, and even more preferably 4/6 to 6/4.

In instances where a green pigment is used as the pigment, the organic solvent is preferably, for example, a glycol solvent; a lactam solvent; an alcohol solvent; a diol solvent; or a mixed solvent of a lactam solvent and a glycol solvent. More preferably, the organic solvent is, for example, dipropylene glycol; triethylene glycol; N-(2-hydroxyethyl) pyrrolidone; N-methylpyrrolidone; 2-propanol; 1,2-hexanediol; or a mixed solvent of 2-pyrrolidone and dipropylene glycol. In the mixed solvents, a volume ratio (lactam solvent/glycol solvent) is preferably 1/9 to 9/1, more preferably 3/7 to 7/3, and even more preferably 4/6 to 6/4.

In instances where a red pigment is used as the pigment, the organic solvent is preferably, for example, a glycol solvent; an alcohol solvent; a diol solvent; or a mixed solvent of a lactam solvent and a glycol solvent. More preferably, the organic solvent is, for example, triethylene glycol; N-(2-hydroxyethyl) pyrrolidone; dipropylene glycol; 2-propanol; 1,2-hexanediol; or a mixed solvent of 2-pyrrolidone and dipropylene glycol. In the mixed solvents, a volume ratio (lactam solvent/glycol solvent) is preferably 1/9 to 9/1, more preferably 3/7 to 7/3, and even more preferably 4/6 to 6/4.

The organic solvent is present preferably in an amount of 1 to 300 parts by mass and more preferably 4 to 200 parts by mass, per 100 parts by mass of the pigment, so as to ensure dispersibility and storage stability.

The aqueous ink-jet ink can be produced as follows. A coloring agent dispersion is first prepared by mixing and dispersing a coloring agent, a pigment dispersing agent, an organic solvent, an aqueous medium, and a basic compound that is used as necessary. Thereafter, the resin composition and one or more additives, such as a drying inhibitor, a penetrating agent, and a surfactant, are mixed with the coloring agent dispersion. For the preparation of the coloring agent dispersion, a method for the mixing and dispersing may be a wet dispersion method, a kneading/dispersion method, or the like. Preferably, the method is a wet dispersion method.

The drying inhibitor is preferably a drying inhibitor that is miscible with an aqueous medium and can produce an effect of preventing clogging of a head of an ink-jet printer. Examples of the drying inhibitor include glycerin, ethylene glycol, diethylene glycol, triethylene glycol, triethylene glycol mono-n-butyl ether, polyethylene glycols having a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. In particular, using glycerin or triethylene glycol as the drying inhibitor is preferable because glycerin and triethylene glycol have good safety properties and can produce an effect of providing excellent ink drying properties and jettability. Preferably, the content of the drying inhibitor in the aqueous ink-jet ink is 3 to 50 mass%.

Examples of the penetrating agent include lower alcohols, such as ethanol and isopropyl alcohol; and glycol monoethers of an alkyl alcohol, such as ethylene glycol hexyl ether, diethylene glycol butyl ether, and propylene glycol propyl ether. The content of the penetrating agent in the aqueous ink-jet ink may be 0.01 to 10 mass%. This is preferable from the standpoint of improving the ability of the ink to penetrate into a recording medium and adjusting a dot size of the ink on a recording medium.

Examples of the surfactants include anionic surfactants, nonionic surfactants, cationic surfactants, and amphoteric surfactants. Anionic surfactants and nonionic surfactants are preferable from the standpoint of adjusting ink properties, such as surface tension.

Examples of the anionic surfactants include alkylbenzene sulfonic acid salts, alkylphenyl sulfonic acid salts, alkylnaphthalene sulfonic acid salts, higher fatty acid salts, sulfuric acid ester salts of a higher fatty acid ester, sulfonic acid salts of a higher fatty acid ester, sulfuric acid ester salts and sulfonic acid salts of a higher alcohol ether, higher alkyl sulfosuccinic acid salts, polyoxyethylene alkyl ether carboxylic acid salts, polyoxyethylene alkyl ether sulfuric acid salts, alkyl phosphoric acid salts, and polyoxyethylene alkyl ether phosphoric acid salts. Specific and preferred examples of these include dodecylbenzene sulfonic acid salts, isopropyl naphthalene sulfonic acid salts, monobutylphenylphenol monosulfonic acid salts, monobutylbiphenyl sulfonic acid salts, and dibutylphenylphenol disulfonic acid salts.

Examples of the nonionic surfactants include polyoxyethylene alkyl ethers, polyoxyethylene alkylphenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycols, oxyethylene adducts of acetylene glycol, and polyethylene glycol-polypropylene glycol block copolymers. Preferred among these are polyoxyethylene nonylphenyl ethers, polyoxyethylene octylphenyl ethers, polyoxyethylene dodecylphenyl ethers, polyoxyethylene alkyl ethers, polyoxyethylene fatty acid esters, sorbitan fatty acid esters, polyoxyethylene sorbitan fatty acid esters, fatty acid alkylolamides, acetylene glycols, oxyethylene adducts of acetylene glycol, and polyethylene glycol-polypropylene glycol block copolymers.

One or more other surfactants may be used, and examples thereof include silicone-based surfactants, such as oxyethylene adducts of a polysiloxane; fluorosurfactants, such as perfluoroalkyl carboxylic acid salts, perfluoroalkyl sulfonic acid salts, and oxyethylene perfluoroalkyl ethers; and biosurfactants, such as spiculisporic acids, rhamnolipids, and lysolecithins.

The content of one or more surfactants in the aqueous ink-jet ink may be 0.001 to 2 mass%, which is preferable from the standpoint of effectively preventing smearing or the like of a printed image or the like. The content is more preferably 0.001 to 1.5 mass% and even more preferably 0.01 to 1 mass%.

The aqueous ink-jet ink can be used in printing with various types of recording media. Examples of the recording media may include absorbent recording media, such as copy paper (PPC paper) that is commonly used in copy machines;

recording media with an ink-absorbing layer; non-water-absorbent recording media without ink absorbency; and low-absorbency recording media with low ink water absorbency.

The binder resin composition for aqueous ink-jet ink applications of the present invention can provide a storage stability and jettability of the composition and can also provide an abrasion resistance and a color development property of printed materials and is, therefore, useful in printing performed with various types of recording media.

EXAMPLES

The present invention will now be described in more detail with reference to Examples. Needless to say, the present invention is not limited to the following Examples, and appropriate modifications may of course be made to implement the present invention, to the extent that the modifications can fall within the purview described above and below. Such modifications are all within the technical scope of the present invention.

(Production Example 1)

(Synthesis of Aqueous Urethane Resin Dispersion 1)

500.0 parts by mass of Excenol 1020 (polypropylene glycol-type polyether polyol manufactured by AGC Inc., number average molecular weight: 1000, hereinafter sometimes referred to as "PPG1000"), which was used as a polymer diol, and 42.2 parts by mass of 2,2-dimethylolpropionic acid (DMPA), which was used as an acidic diol, were added to a four-neck flask equipped with a thermometer, a stirrer, a reflux condenser, and a nitrogen inlet tube and were thoroughly stirred. Subsequently, 320.7 parts by mass of hydrogenated 4,4'-diphenylmethane diisocyanate (H12MDI), which was used as an isocyanate, 0.16 parts by mass of dibutyltin dilaurate, which was used as a catalyst, and methyl ethyl ketone (MEK), which was used as a solvent, were added, and the contents were thoroughly stirred. After the non-volatile content was adjusted to be 80 mass%, the mixture was allowed to react at 75°C. The completion of the reaction was confirmed by measuring an NCO concentration, and subsequently, MEK was added. The mixture was then stirred for 30 minutes and cooled to 40°C or less, to give a urethane prepolymer solution having a non-volatile content of 60 mass%. A 48 mass% aqueous solution of potassium hydroxide was added to the resulting urethane prepolymer solution, in an amount necessary to neutralize 100% of the acid groups of the DMPA, and the mixture was then stirred for 15 minutes to neutralize the acid groups. Subsequently, under vigorous stirring, ion-exchanged water was gradually added at twice the amount of the prepolymer solution to emulsify the urethane. Thereafter, 19.8 parts by mass of ethylene diamine (EDA), which was used as a chain extender, and 4.5 parts by mass of N-monoethanolamine (MEA) were added, and the contents were then stirred at 40°C for 3 hours to be allowed to undergo a chain extension reaction. After completion of the reaction, the MEK was removed by distillation under reduced pressure, and the non-volatile content was adjusted with ion-exchanged water. In this manner, an aqueous urethane resin dispersion 1 was synthesized. The aqueous urethane resin dispersion 1 had a non-volatile content of 30 mass% and an acid number on a solids basis of 20 mgKOH/g.

(Production Example 2)

(Synthesis of Aqueous Urethane Resin Dispersion 2)

An aqueous urethane resin dispersion 2 was synthesized in a manner similar to that described in Production Example 1, except that the amount of Excenol 1020 was changed from 500.0 parts by mass to 350.0 parts by mass, the amount of DMPA was changed from 42.2 parts by mass to 93.9 parts by mass, the amount of H12MDI was changed from 320.7 parts by mass to 413.2 parts by mass, the amount of EDA was changed from 19.8 parts by mass to 25.6 parts by mass, and the amount of MEA was changed from 4.5 parts by mass to 5.8 parts by mass. The aqueous urethane resin dispersion 2 had a non-volatile content of 30 mass% and an acid number on a solids basis of 45 mgKOH/g.

(Production Example 3)

(Synthesis of Aqueous Urethane Resin Dispersion 3)

An aqueous urethane resin dispersion 3 was synthesized in a manner similar to that described in Production Example 1, except that Excenol 1020 was replaced with 350.0 parts by mass of Eternacoll UH-100 (crystalline polycarbonate diol, manufactured by UBE Corporation, number average molecular weight: 1000), the amount of DMPA was changed from 42.2 parts by mass to 93.9 parts by mass, the amount of H12MDI was changed from 320.7 parts by mass to 413.2 parts by mass, the amount of EDA was changed from 19.8 parts by mass to 25.6 parts by mass, and the amount of MEA was changed from 4.5 parts by mass to 5.8 parts by mass. The aqueous urethane resin dispersion 3 had a non-volatile content of 30 mass% and an acid number on a solids basis of 45 mgKOH/g.

(Production Example 4)

(Synthesis of Aqueous Urethane Resin Dispersion 4)

An aqueous urethane resin dispersion 4 was synthesized in a manner similar to that described in Production Example 1, except that the amount of DMPA was changed from 42.2 parts by mass to 38.9 parts by mass, 320.7 parts by mass of H12MDI was replaced with 263.4 parts by mass of isophorone diisocyanate (IPDI), the amount of EDA was changed from 19.8 parts by mass to 19.2 parts by mass, and the amount of MEA was changed from 4.5 parts by mass to 4.3 parts by mass. The aqueous urethane resin dispersion 4 had a non-volatile content of 30 mass% and an acid number on a solids basis of 20 mgKOH/g.

(Production Example 5)

(Synthesis of Aqueous Urethane Resin Dispersion 5)

An aqueous urethane resin dispersion 5 was synthesized in a manner similar to that described in Production Example 1, except that the amount of Excenol 1020 was changed from 500.0 parts by mass to 350.0 parts by mass, the amount of DMPA was changed from 42.2 parts by mass to 98.6 parts by mass, 320.7 parts by mass of H12MDI was replaced with 361.8 parts by mass of IPDI, the amount of EDA was changed from 19.8 parts by mass to 26.4 parts by mass, and the amount of MEA was changed from 4.5 parts by mass to 6.0 parts by mass. The aqueous urethane resin dispersion 5 had a non-volatile content of 30 mass% and an acid number on a solids basis of 50 mgKOH/g.

(Production Example 6)

(Synthesis of Aqueous Urethane Resin Dispersion 6)

An aqueous urethane resin dispersion 6 was synthesized in a manner similar to that described in Production Example 1, except that the amount of Excenol 1020 was changed from 500.0 parts by mass to 350.0 parts by mass, the amount of DMPA was changed from 42.2 parts by mass to 93.9 parts by mass, the amount of H12MDI was changed from 320.7 parts by mass to 413.2 parts by mass, the amount of EDA was changed from 19.8 parts by mass to 22.7 parts by mass, and 4.5 parts by mass of MEA was replaced with 16.1 parts by mass of isophoronediamine (IPDA). The aqueous urethane resin dispersion 6 had a non-volatile content of 30 mass% and an acid number on a solids basis of 45 mgKOH/g.

(Production Example 7)

(Synthesis of Aqueous Urethane Resin Dispersion 7)

An aqueous urethane resin dispersion 7 was synthesized in a manner similar to that described in Production Example 1, except that the amount of Excenol 1020 was changed from 500.0 parts by mass to 350.0 parts by mass, the amount of DMPA was changed from 42.2 parts by mass to 98.6 parts by mass, 320.7 parts by mass of H12MDI was replaced with 361.8 parts by mass of IPDI, the amount of EDA was changed from 19.8 parts by mass to 23.5 parts by mass, and 4.5 parts by mass of MEA was replaced with 6.7 parts by mass of diethylenetriamine (DETA). The aqueous urethane resin dispersion 7 had a non-volatile content of 30 mass% and an acid number on a solids basis of 50 mgKOH/g.

(Production Example 8)

(Synthesis of Aqueous Urethane Resin Dispersion 8)

An aqueous urethane resin dispersion 8 was synthesized in a manner similar to that described in Production Example 1, except that the amount of Excenol 1020 was changed from 500.0 parts by mass to 400.0 parts by mass, the amount of DMPA was changed from 42.2 parts by mass to 77.8 parts by mass, 320.7 parts by mass of H12MDI was replaced with 326.8 parts by mass of IPDI, 19.8 parts by mass of EDA was replaced with 20.9 parts by mass of hydrazine monohydrate (HYD), and the amount of MEA was changed from 4.5 parts by mass to 2.7 parts by mass. The aqueous urethane resin dispersion 8 had a non-volatile content of 30 mass% and an acid number on a solids basis of 40 mgKOH/g.

(Production Example 9)

(Synthesis of Aqueous Urethane Resin Dispersion 9)

An aqueous urethane resin dispersion 9 was synthesized in a manner similar to that described in Production Example 1, except that the amount of DMPA was changed from 42.2 parts by mass to 40.2 parts by mass, the amount of H12MDI was changed from 320.7 parts by mass to 314.8 parts by mass, the amount of EDA was changed from 19.8 parts by mass to 21.6 parts by mass, and 4.5 parts by mass of the MEA was not used. The aqueous urethane resin dispersion 9 had a non-volatile content of 30 mass% and an acid number on a solids basis of 20 mgKOH/g.

(Production Example 10)

(Synthesis of Aqueous Urethane Resin Dispersion 10)

An aqueous urethane resin dispersion 10 was synthesized in a manner similar to that described in Production Example 1, except that the amount of Excenol 1020 was changed from 500.0 parts by mass to 350.0 parts by mass, the amount of DMPA was changed from 42.2 parts by mass to 93.9 parts by mass, the amount of H12MDI was changed from 320.7 parts by mass to 413.2 parts by mass, the amount of EDA was changed from 19.8 parts by mass to 28.4 parts by mass, and 4.5 parts by mass of the MEA was not used. The aqueous urethane resin dispersion 10 had a non-volatile content of 30 mass% and an acid number on a solids basis of 45 mgKOH/g.

(Production Example 11)

(Synthesis of Aqueous Urethane Resin Dispersion 11)

An aqueous urethane resin dispersion 11 was synthesized in a manner similar to that described in Production Example 1, except that the amount of DMPA was changed from 42.2 parts by mass to 67.1 parts by mass, 320.7 parts by mass of H12MDI was replaced with 333.5 parts by mass of IPDI, the amount of EDA was changed from 19.8 parts by mass to 27.0 parts by mass, and 4.5 parts by mass of the MEA was not used. The aqueous urethane resin dispersion 11 had a non-volatile content of 30 mass% and an acid number on a solids basis of 30 mgKOH/g.

(Examples 1 to 8 and Comparative Examples 1 to 3)

<Production of Pigment Dispersion>

50 parts by mass of C.I. Pigment Red 122 (Fastogen Super Magenta RY, manufactured by DIC Corporation) and 10 parts by mass of a styrene-acrylic acid copolymer (weight average molecular weight: 11,000, acid number: 180 mgKOH/g) were sequentially added to a 0.5-L jacketed tank of a mini planetary mixer (mini-PLM, manufactured by Aicohsha Mfg. Co., Ltd.). Thereafter, the contents were stirred at a rotation speed of 80 rpm and a revolution speed of 25 rpm for 10 minutes in a state in which the jacketed tank had been heated to 80°C.
Subsequently, in a state in which the temperature of the jacketed tank was maintained at 80°C, 5.3 parts by mass of a 34 mass% aqueous solution of potassium hydroxide and 30 parts by mass of triethylene glycol were added to the composition, and the composition was then kneaded at a rotation speed of 80 rpm and a revolution speed of 25 rpm for 60 minutes. In this manner, a solid kneaded product was obtained.
100 parts by mass of ion-exchanged water and 10 parts by mass of triethylene glycol were added to the kneaded product, and these were mixed together with stirring in a blender for 10 minutes. The mixture was mixed with ion-exchanged water and Proxel GXL (Lonza Japan Ltd.) to give an aqueous pigment dispersion, which had a pigment concentration of 15.0 mass%, a triethylene glycol concentration of 12.0 mass%, a Proxel GXL concentration of 0.1 mass%, and a non-volatile content of 18.2 mass%.

<Production of Aqueous Ink-Jet Ink>

Aqueous ink-jet inks were prepared by mixing 20.0 parts by mass of the pigment dispersion obtained as described above, 3.3 parts by mass of the respective aqueous urethane resin dispersions obtained in Production Examples 1 to 10, 8.0 parts by mass of 2-pyrrolidinone, 8.0 parts by mass of triethylene glycol mono-n-butyl ether, 3.0 parts by mass of glycerin, 0.5 parts by mass of Surfynol 440 (manufactured by Air Products and Chemicals, Inc.), and 57.3 parts by mass of ion-exchanged water together. The aqueous ink-jet inks had a pigment concentration of 3.0 mass% and a urethane concentration on a solids basis of 1.0 mass%.

<Abrasion Resistance>

Printed materials for testing were prepared by applying each of the aqueous ink-jet inks, which were obtained as described above, to photo printing paper (HP Advanced Photo Paper, manufactured by HP Inc.) with a bar coater #3. The printed materials were dried at room temperature for one day, and subsequently, a rubbing test was performed with a Gakushin-type rubbing tester. For the testing, plain paper was attached to the rubbing arm, and the arm was reciprocated 20 times under a load of 200 g. A degree of abrasion of the printed surface was evaluated visually, and inks given a rating of A or B were determined to be able to provide an abrasion resistance sufficient for practical use.

[Evaluation Criteria]

A: No scratches were left on the printed surface, and no peeling or the like of the coloring material was observed.
B: A small number of scratches were left on the printed surface, but no peeling or the like of the coloring material was observed.
C: A significant number of scratches were left on the printed surface, and peeling or the like of the coloring material was observed.

<Ink Jettability>

Printed materials for evaluation were prepared as follows. Each of the aqueous ink-jet inks obtained as described above was introduced into a black ink cartridge of a commercially available ink-jet printer ENVY 4500 (manufactured by HP Inc.), and solid area printing was performed on a transparent OHP sheet with a print density setting of 100%. An absorbance (value at a maximum peak at approximately 536 nm) of the printed surface of the OHP sheet was measured with an unprinted OHP sheet being used as a reference. The absorbance was compared with the absorbance of a binder-free ink, and a jettability index was calculated according to the following equation.

$$\text{Jettability index} = (\text{absorbance of binder-containing ink})/(\text{absorbance of binder-free ink})$$

When the jettability index was 0.80 or greater, a rating of A was given; when the index was 0.70 or greater and 0.79 or less, a rating of B was given; when the index was 0.60 or greater and 0.69 or less, a rating of C was given; and when the index was 0.59 or less, a rating of D was given. Inks given a rating of A or B were determined to have jettability sufficient for practical use.
The "binder-free ink" used was an aqueous ink-jet ink prepared by mixing 20.0 parts by mass of the pigment dispersion obtained as described above, 8.0 parts by mass of 2-pyrrolidinone, 8.0 parts by mass of triethylene glycol mono-n-butyl ether, 3.0 parts by mass of glycerin, 0.5 parts by mass of Surfynol 440 (manufactured by Air Products and Chemicals, Inc.), and 60.5 parts by mass of ion-exchanged water together. The aqueous ink-jet ink had a pigment concentration of 3.0 mass% and a urethane concentration on a solids basis of 0 mass%.

<Color Development Properties for Plain Paper>

Each of the aqueous ink-jet inks obtained as previously described was introduced into a black ink cartridge of a commercially available ink-jet printer ENVY 4500 (manufactured by HP Inc.), and a solid pattern was printed on plain paper with a print density setting of 100%. A print density (OD) of the printed materials was measured with an integrating sphere spectrophotometer X-Rite eXact, and a color development property index was calculated according to the following equation.

$$\text{Color development property index} = (\text{OD of binder-containing-ink-printed surface})/(\text{OD of binder-free-ink-printed surface})$$

When the color development property index was 0.90 or greater, a rating of A was given; when the index was 0.80 or greater and 0.89 or less, a rating of B was given; when the index was 0.60 or greater and 0.79 or less, a rating of C was given; and when the index was 0.59 or less, a rating of D was given. Inks given a rating of A or B were determined to be able to provide color development properties sufficient for practical use.

[Table 1]

| | | Composition of Urethane | | | | | | Evaluations of Ink | | |
|---|---|---|---|---|---|---|---|---|---|---|
| | | Urethane No. | Polymer diol | Isocyanate | Chain extender 1 | Chain extender 2 | Acid number on solids basis | Abrasion resistance | Ink jettability | Color development properties for plain paper |
| Examples | 1 | 1 | PPG1000 | H12MDI | EDA | MEA | 20 | A | B | B |
| | 2 | 2 | PPG1000 | H12MDI | EDA | MEA | 45 | B | A | A |
| | 3 | 3 | UH-100 | H12MDI | EDA | MEA | 45 | A | B | B |
| | 4 | 4 | PPG1000 | IPDI | EDA | MEA | 20 | A | B | B |
| | 5 | 5 | PPG1000 | IPDI | EDA | MEA | 50 | A | A | B |
| | 6 | 6 | PPG1000 | H12MDI | EDA | IPDA | 45 | B | B | B |
| | 7 | 7 | PPG1000 | H12MDI | EDA | DETA | 50 | A | B | A |
| | 8 | 8 | PPG1000 | IPDI | HYD | MEA | 40 | B | A | A |
| Comparative Examples | 1 | 9 | PPG1000 | H12MDI | EDA | - | 20 | A | D | C |
| | 2 | 10 | PPG1000 | H12MDI | EDA | - | 45 | A | C | B |
| | 3 | 11 | PPG1000 | IPDI | EDA | - | 30 | A | C | C |

EP 4 353 788 A1

As shown in the table, in the instance where two or more amines were used in combination, good results were obtained for all of the abrasion resistance, jettability, and color development property for plain paper. In contrast, in the instance where only one amine was used, the jettability and color development properties were at a level insufficient for practical use although the abrasion resistance was excellent.

Industrial Applicability

The binder resin composition for aqueous ink-jet ink applications of the present invention can form an aqueous ink-jet ink having excellent jettablity and being capable of providing excellent abrasion resistance and color development properties of printed materials and is, therefore, useful in printing performed with various types of recording media.

**Claims**

1. A binder resin composition for aqueous ink-jet ink applications comprising:

   a urethane resin (I);
   a basic compound (II); and
   an aqueous medium (III), wherein
   the urethane resin (I) is a reaction product of a polyol (a), a polyisocyanate (b), and an amine compound (c), and
   the amine compound (c) comprises a plurality of amine compounds having different structures, and one of the amine compounds is a linear diamine compound (c1-1) or a hydrazine compound (cl-2).

2. The binder resin composition for aqueous ink-jet ink applications according to Claim 1, wherein the amine compound (c) further comprises a primary or secondary monoamine compound (c2-1), an alicyclic diamine compound (c2-2), an aromatic diamine compound (c2-3), a triamine compound (c2-4), or a tetraamine compound (c2-5).

3. The binder resin composition for aqueous ink-jet ink applications according to Claim 1 or 2, wherein the basic compound (II) comprises a metal hydroxide.

4. The binder resin composition for aqueous ink-jet ink applications according to any one of Claims 1 to 3, wherein the polyisocyanate (b) comprises an alicyclic polyisocyanate (b1) .

5. The binder resin composition for aqueous ink-jet ink applications according to any one of Claims 1 to 4, wherein the polyol (a) comprises at least one polymer diol (a1) selected from the group consisting of polyether polyols, polyester polyols, and polycarbonate polyols.

6. An aqueous ink-jet ink comprising the binder resin composition for aqueous ink-jet ink applications according to any one of Claims 1 to 5.

7. A printing layer formed from the aqueous ink-jet ink according to Claim 6.

## INTERNATIONAL SEARCH REPORT

International application No.

**PCT/JP2022/031159**

### A. CLASSIFICATION OF SUBJECT MATTER

*C09D 11/30*(2014.01)i; *C09D 11/38*(2014.01)i; *C08G 18/00*(2006.01)i; *C08G 18/32*(2006.01)i; *C08G 18/75*(2006.01)i; *B41M 5/00*(2006.01)i

FI: C09D11/30; C09D11/38; B41M5/00 120; C08G18/00 C; C08G18/32 028; C08G18/75

According to International Patent Classification (IPC) or to both national classification and IPC

### B. FIELDS SEARCHED

Minimum documentation searched (classification system followed by classification symbols)

C09D11/30; C09D11/38; C08G18/00; C08G18/32; C08G18/75; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-507994 A (E. I. DU PONT DE NEMOURS AND CO.) 10 March 2011 (2011-03-10) claim 1, paragraphs [0108], [0307]-[0310] | 1-2, 4-7 |
| Y | | 3 |
| X | JP 2018-109129 A (CANON INC.) 12 July 2018 (2018-07-12) claims 1, 3-4, 8, paragraphs [0026], [0034]-[0039], [0043], [0072], table 1, urethane resin 4, example 10 | 1-7 |
| Y | | 3 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **31 October 2022** | **08 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/031159**

| Patent document cited in search report | | | Publication date (day/month/year) | Patent family member(s) | Publication date (day/month/year) |
|---|---|---|---|---|---|
| JP | 2011-507994 | A | 10 March 2011 | US 2010/0143589 A1 claim 1, paragraphs [0149], [0378]-[0381] WO 2009/076386 A1 EP 2220177 A1 | |
| JP | 2018-109129 | A | 12 July 2018 | (Family: none) | |

Form PCT/ISA/210 (patent family annex) (January 2015)

**EP 4 353 788 A1**

**Patent documents cited in the description**

- JP 2017150125 A

**Non-patent literature cited in the description**

- Colour Index. Society of Dyers and Colourists